(19) Europäisches Patentamt
European Patent Office
Office européen des brevets

(11) Veröffentlichungsnummer : **0 407 873 B1**

(12) # EUROPÄISCHE PATENTSCHRIFT

(45) Veröffentlichungstag der Patentschrift : **29.09.93 Patentblatt 93/39**

(51) Int. Cl.$^5$ : **A01N 43/54,** C07D 239/32

(21) Anmeldenummer : **90112738.1**

(22) Anmeldetag : **04.07.90**

(54) **Verfahren zur Schädlingsbekämpfung mit Hilfe von Pyrimidinen.**

Die Akte enthält technische Angaben, die nach dem Eingang der Anmeldung eingereicht wurden und die nicht in dieser Patentschrift enthalten sind.

(30) Priorität : **13.07.89 DE 3923068**

(43) Veröffentlichungstag der Anmeldung : **16.01.91 Patentblatt 91/03**

(45) Bekanntmachung des Hinweises auf die Patenterteilung : **29.09.93 Patentblatt 93/39**

(84) Benannte Vertragsstaaten : **AT BE CH DE DK ES FR GB GR IT LI NL**

(56) Entgegenhaltungen :
**EP-A- 0 256 667**
**EP-A- 0 299 694**
**DE-A- 3 823 991**
**DE-A- 3 835 028**

(73) Patentinhaber : **BASF Aktiengesellschaft**
**Carl-Bosch-Strasse 38**
**D-67063 Ludwigshafen (DE)**

(72) Erfinder : **Schuetz, Franz, Dr.**
**Budapester Strasse 45**
**D-6700 Ludwigshafen (DE)**
Erfinder : **Brand, Siegbert Dr.**
**Hegelstrasse 39**
**D-6940 Weinheim (DE)**
Erfinder : **Wild, Jochen, Dr.**
**An der Marlach 7**
**D-6705 Deidesheim (DE)**
Erfinder : **Kuekenhoehner, Thomas, Dr.**
**Seidelstrasse 2**
**D-6710 Frankenthal (DE)**
Erfinder : **Hofmeister, Peter, Dr.**
**Bernard-Humblot-Strasse 12**
**D-6730 Neustadt (DE)**
Erfinder : **Kuenast, Christoph, Dr.**
**Salierstrasse 2**
**D-6701 Otterstadt (DE)**

**EP 0 407 873 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Bekämpfung von Insekten und Spinnmilben, welches beinhaltet, daß man eine für die Schädlinge wirksame Menge eines substituierten Pyrimidins der allgemeinen Formel I

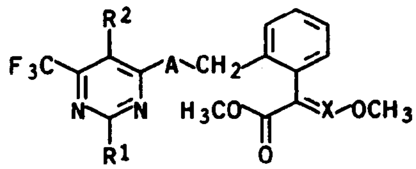

I

in der
$R^1$ $C_1$-$C_6$-Alkyl, $C_3$-$C_6$-Cycloalkyl, $C_1$-$C_4$-Halogenalkyl, $C_1$-$C_4$-Alkoxy, $C_1$-$C_4$-Alkylthio, unsubstituiertes Aryl oder ein oder mehrfach durch $C_1$-$C_6$-Alkyl, $C_1$-$C_4$-Alkoxy oder Halogen substituiertes Aryl;
$R^2$ Halogen oder Wasserstoff;
A Sauerstoff oder Schwefel und
X CH oder N bedeuten
oder dessen pflanzenverträgliches Säureadditionssalz oder Metallkomplex auf die Schädlinge bzw. deren Lebensraum einwirken läßt.

Außerdem betrifft die Erfindung Pyrimidine der allgemeinen Formel Ia

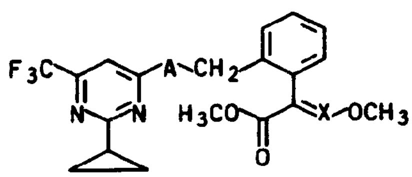

Ia

in der A Sauerstoff oder Schwefel und X CH oder N bedeutet sowie Schädlingsbekämpfungsmittel, die die Pyrimidine Ia enthalten.

In der DE-A 38 23 991 und der DE-A 38 35 028 sind substituierte Pyrimidine mit fungizider Wirksamkeit beschrieben.

Aus der EP-A-256 667 ist bekannt, heterocyclisch substituierte α-Aryl-acrylsäuremethylester, z.B. den α-[2-(Benzoxazol-2′-yloxy)-phenyl]-β-methoxy-acrylsäuremethylester als Insektizide zu verwenden. Seine insektizide Wirkung ist jedoch unbefriedigend.

Außerdem werden in der EP-A 299 694 u.a. insektizid wirksame Verbindungen beschrieben, deren allgemeine Formel die Verbindungen der Formeln I respektive Ia umfaßt.

Der Erfindung lag die Aufgabe zugrunde, ein wirkungsvolles Verfahren zur Bekämpfung von Schädlingen aufzufinden.

Dementsprechend wurde gefunden, daß die eingangs definierten Pyrimidine I und deren pflanzenverträgliche Säureadditionssalze oder Metallkomplexe eine ausgezeichnete insektizide und insbesondere akarizide Wirkung besitzen, die besser ist, als die der bekannten α-Aryl-acrylsäuremethylester.

Desweiteren wurden die Pyrimidine der Formel Ia und sie enthaltende Schädlingsbekämpfungsmittel gefunden.

Die in der allgemeinen Formel I aufgeführten Reste $R^1$ und $R^2$ können beispielsweise folgende Bedeutung haben:
$R^1$ $C_1$-$C_6$-Alkyl (z.B. Methyl, Ethyl, n- oder iso-Propyl, n-, iso-, sec.- oder tert.-Butyl, n-, iso-, sec.-, tert.- oder neo-Pentyl, Hexyl), $C_3$-$C_6$-Cycloalkyl (z.B. Cyclopropyl, Cyclobutyl, Cyclopentyl, Cyclohexyl), $C_1$-$C_4$-Halogenalkyl (z.B. Trifluormethyl, 2, 2, 2-Trifluorethyl, Pentafluorethyl, Chlormethyl, Dichlormethyl, Trichlormethyl), $C_1$-$C_4$-Alkoxy (z.B. Methoxy, Ethoxy, n- oder iso-Propoxy, n-, iso-, sec. oder tert.-Butoxy), $C_1$-$C_4$-Alkylthio (z.B. Methylthio, Ethylthio, n- oder iso-Propylthio, Butylthio) oder Aryl, (z.B. Phenyl) sein, wobei der aromatische Ring gegebenenfalls durch einen oder mehrere, insbesondere einen bis drei der folgenden Reste substituiert sein kann: $C_1$-$C_6$-Alkyl (z.B. Methyl, Ethyl, n- oder iso-Propyl, n-, iso-, sec.- oder tert.-Butyl, n-, iso-, sec.-tert.- oder neo-Pentyl), $C_1$-$C_4$-Alkoxy (z.B. Methoxy, Ethoxy, n- oder iso-Propoxy, n-, iso-, sec.-oder tert.-Butoxy)

oder Halogen (z.B. Fluor, Chlor, Brom);
$R^2$ Halogen (z.B. Fluor, Chlor, Brom) oder Wasserstoff.

Insbesondere eignen sich zur Bekämpfung von Insekten und Spinnmilben Pyrimidine der allgemeinen Formel I, in denen $R^1$ n-Propyl oder cyclo-Propyl, $R^2$ Wasserstoff, A Sauerstoff oder Schwefel und X CH oder N bedeutet.

Salze sind beispielsweise die pflanzenverträglichen Säureadditionssalze, z.B. die Salze mit anorganischen oder organischen Säuren, wie beispielsweise die Salze der Salzsäure, Bromwasserstoffsäure, Salpetersäure, Oxalsäure, Essigsäure, Schwefelsäure, Phosphorsäure oder Dodecylbenzolsulfonsäure. Die Wirksamkeit der Salze geht auf das Kation zurück, so daß die Wahl des Anions im allgemeinen beliebig ist.

Ferner lassen sich die Verbindungen der Formel I nach bekannten Methoden in Metallkomplexe überführen. Das kann durch Umsetzung dieser Verbindungen mit Metallsalzen, z.B. Salzen der Metalle Kupfer, Zink, Eisen, Mangan oder Nickel, beispielsweise Kupfer(II)-chlorid, Zink(II)-chlorid, Eisen(III)-chlorid, Kupfer(II)-nitrat, Mangan(II)-chlorid oder Nickel(II)-bromid erfolgen.

Die Herstellung der Verbindungen der allgemeinen Formel I und dementsprechend der Verbindungen Ia erfolgt beispielsweise so, daß man substituierte Pyrimidine der allgemeinen Formel II bzw. IIa mit substituierten Benzylhalogeniden der allgemeinen Formel III (X hat die oben angegebene Bedeutung, Y = Cl oder Br) umsetzt.

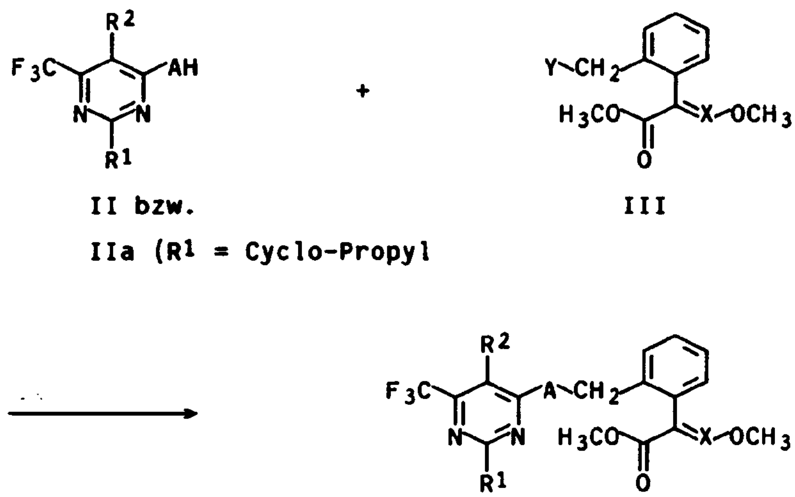

II bzw.
IIa ($R^1$ = Cyclo-Propyl

III

I bzw.
Ia ($R^1$ = Cyclo-Propyl)

$R^1$, $R^2$ und X haben die obengenannte Bedeutung, Y steht für eine übliche Abgangsgruppe, z.B. für Chlorid oder Bromid.

Die Umsetzungen zu den Verbindungen der allgemeinen Formel I können z.B. in einem inerten Lösungs- oder Verdünnungsmittel (z.B. Aceton, Acetonitril, Dimethylsulfoxid, Dioxan, Dimethylformamid, N-Methylpyrrolidon, N,N'-Dimethylpropylenharnstoff oder Pyridin) unter Verwendung einer Base (z.B. Natriumcarbonat, Kaliumcarbonat) durchgeführt werden. Außerdem kann es von Vorteil sein, der Reaktionsmischung einen Katalysator wie z.B. Tris-(3,6-dioxoheptyl)-amin zuzusetzen (J. Org. Chem. 50 (1985) 3717).

Alternativ kann auch so vorgegangen werden, daß man die Verbindungen der allgemeinen Formel II zunächst mit einer Base (z.B. Natriumhydroxid oder Kaliumhydroxid) in die entsprechenden Natrium- oder Kaliumsalze überführt und diese dann in einem inerten Lösungs- oder Verdünnungsmittel (z.B. Dimethylformamid) mit den substituierten Benzylhalogeniden der allgemeinen Formel III zu den entsprechenden substituierten Pyrimidinen der allgemeinen Formel I umsetzt.

Die als Ausgangsverbindungen benötigten substituierten Pyrimidine der allgemeinen Formel II sind entweder bekannt oder können durch Verfahren analog zu bekannten Verfahren hergestellt werden. Entsprechende Herstellverfahren sind z.B. beschrieben in: EP-A 224 217 oder J. Heterocyclic Chem. 20 (1983) 219.

α-(2-Halogenmethyl)-phenyl-β-methoxy-acrylsäuremethylester der allgemeinen Formel IIIa (X=CH, Y=Cl oder Br) sind entweder bekannt oder können nach bekannten Verfahren hergestellt werden. Entsprechende Herstellverfahren sind z.B. beschrieben in DE-A-35 19 280, DE-A-35 45 318 und DE-A-35 45 319.

Zur Darstellung der substituierten Pyrimidine der allgemeinen Formel I werden ferner die 2-(Halogenmethyl)-phenylglyoxylsäuremethylester-O-methyloxime der allgemeinen Formel IIIb (X=N, Y=Cl oder Br) benötigt. Diese erhält man z.B. durch Halogenierung des 2-Methyl-phenylglyoxylsäuremethylester-O-methyloxims IV nach literaturbekannten Methoden, beispielsweise durch radikalische Bromierung oder Chlorierung mittels Brom oder Chlor in einem inerten Lösungsmittel (z.B. Tetrachlormethan), gegebenenfalls unter Belichtung mit einer Lichtquelle (z.B. Hg-Dampflampe, 300 W) oder durch Umsetzung mit N-Chlor- bzw. N-Brom-succinimid (vgl. Horner, Winkelmann, Angew. Chem. 71 (1959) 349).

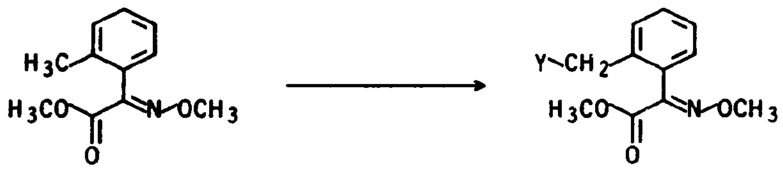

IV

IIIb: Y = Cl, Br

2-Methyl-phenylglyoxylsäuremethylester-O-methyloxim IV läßt sich herstellen, indem man 2-Methylphenylglyoxylsäure-methylester V

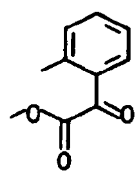

V

z.B. a) mit O-Methylhydroxylamin-hydrochlorid umsetzt oder b) mit Hydroxylamin-hydrochlorid zum entsprechenden Oxim umsetzt und dieses danach mit einem Methylierungsmittel der Formel $CH_3$-L, in der L eine Abgangsgruppe (z.B. Chlorid, Bromid, Jodid, Methylsulfat) bedeutet, zur Reaktion bringt (vgl. DE-36 23 921).

Die Verbindungen der allgemeinen Formel I können bei der Herstellung aufgrund der C=C- bzw. C=N-Doppelbindung als E/Z-Isomerengemische anfallen. Diese können in der üblichen Weise, z.B. durch Kristallisation oder Chromatographie, in die einzelnen Komponenten getrennt werden. Sowohl die einzelnen isomeren Verbindungen als auch ihre Gemische werden von der Erfindung umfaßt und sind als Insektizide brauchbar.

Beispiele

Die folgenden Beispiele und Vorschriften sollen die Herstellung der Wirkstoffe und ihrer Vorprodukte erläutern.

Beispiel 1

α[2-(2′-n-propyl-6′-trifluormethyl-4′-pyrimidinyl)-oxymethyl-phenyl]-β-methoxy-acrylsäuremethylester (Verbindung Nr. 9)

20,6 g (0,1 mol) 2-n-propyl-6-trifluormethyl4-hydroxypyrimidin, 28,5 g (0,1 mol) α-(2-Brommethyl)-phenyl-β-methoxy-acrylsäuremethylester und 20,7 g (0,15 mol) Kaliumcarbonat werden in 250 ml Dimethylformamid 48 Stunden bei Raumtemperatur gerührt. Anschließend wird das Reaktionsgemisch in Wasser aufgenommen und mit Diethylether extrahiert. Die organische Phase wird mit Wasser gewaschen, über Magnesiumsulfat getrocknet und eingeengt. Das erhaltene Öl wird über Kieselgel (Methylenchlorid) filtriert. Nach dem Entfernen des Lösungsmittels erhält man 16,2 g (40 %) der Titelverbindung in Form farbloser Kristalle (Fp.: 81 - 82°C).

Beispiel 2

α-[2-(2′-Methyl-6′-trifluormethyl-4′-pyrimidinyl)-thiomethyl-phenyl]-glyoxylsäuremethylester-O-methyloxim (Verbindung Nr. 4)

Vorschrift 1

2-(Brommethyl )-phenylglyoxylsäuremethylester-O-methyloxim

27,5 g (0,133 mol) 2-Methyl-phenylglyoxylsäuremethylester-O-methyloxim gelöst in 400 ml Tetrachlormethan werden unter Rühren mit 21,4 g (0,133 mol) Brom versetzt. Dann wird unter Bestrahlung mit einer 300 W-Hg-Dampflampe vier Stunden auf Rückflußtemperatur erhitzt. Danach wird eingeengt, in Essigester/Wasser aufgenommen, mit Wasser gewaschen, mit Natriumsulfat getrocknet und eingeengt. Das Rohprodukt wird mit Cyclohexan/Essigester (9/1) an Kieselgel chromatographisch gereinigt. Es werden 17,4 g (46 %) der oben genannten Verbindung als Öl erhalten.

Vorschrift 2

9,7 g (0,05 mol) 2-Methyl-6-trifluormethyl-4-mercaptopyrimidin, 14,3 g (0,05 mol) 2-(Brommethyl)-phenylglyoxylsäuremethylester-O-methyloxim und 11,0 g (0,08 mol) Kaliumcarbonat werden in 125 ml Dimethylformamid 48 Stunden bei Raumtemperatur gerührt. Anschließend wird das Reaktionsgemisch eingeengt, der Rückstand in Methylenchlorid aufgenommen, die organische Phase mit Wasser gewaschen und über Magnesiumsulfat getrocknet. Das nach dem Einengen erhaltene Öl wird mit Methyl-tert.-Butylether/Hexan verrieben. Man erhält 6,3 g (32 %) der Titelverbindung in Form farbloser Kristalle (Fp.: 60-61°C).

In entsprechender Weise lassen sich die folgenden Verbindungen herstellen:

Tabelle 1: Verbindungen der allgemeinen Formel I.

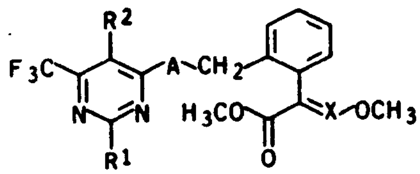

I

| Nr. | $R^1$ | $R^2$ | A | X | Fp.: (°C) |
|---|---|---|---|---|---|
| 1 | $CH_3$ | H | O | CH | 95- 96 (E) |
| 2 | $CH_3$ | H | O | N | |
| 3 | $CH_3$ | H | S | CH | Öl (E) |
| 4 | $CH_3$ | H | S | N | 60- 61 (E) |
| 5 | $C_2H_5$ | H | O | CH | |
| 6 | $C_2H_5$ | H | O | N | |
| 7 | $C_2H_5$ | H | S | CH | |
| 8 | $C_2H_5$ | H | S | N | |
| 9 | n-$C_3H_7$ | H | O | CH | 81- 82 (E) |
| 10 | n-$C_3H_7$ | H | O | N | 73- 75 (E) |
| 11 | n-$C_3H_7$ | H | S | CH | |
| 12 | n-$C_3H_7$ | H | S | N | |
| 13 | cyclo-$C_3H_5$ | H | O | CH | 73- 74 (E) |
| 14 | cyclo-$C_3H_5$ | H | O | N | 98-100 (E) |
| 15 | cyclo-$C_3H_5$ | H | S | CH | |
| 16 | cyclo-$C_3H_5$ | H | S | N | |
| 17 | t-$C_4H_9$ | H | O | CH | Öl (E) |
| 18 | t-$C_4H_9$ | H | O | N | 96- 98 (E) |
| 19 | t-$C_4H_9$ | H | S | CH | |
| 20 | t-$C_4H_9$ | H | S | N | |
| 21 | $CF_3$ | H | O | CH | 57- 58 (E) |
| 22 | $CF_3$ | H | O | N | |
| 23 | $CF_3$ | H | S | CH | |
| 24 | $CF_3$ | H | S | N | |
| 25 | $SCH_3$ | H | O | CH | 110-112 (E) |
| 26 | $SCH_3$ | H | O | N | |
| 27 | $SCH_3$ | H | S | CH | |
| 28 | $SCH_3$ | H | S | N | |
| 29 | $SCH_3$ | Cl | O | CH | Öl (E) |
| 30 | $SCH_3$ | Cl | O | N | |
| 31 | $SCH_3$ | Cl | S | CH | |
| 32 | $SCH_3$ | Cl | S | N | |
| 33 | $C_6H_5$ | H | O | CH | 109-110 (E) |
| 34 | $C_6H_5$ | H | O | N | |
| 35 | $C_6H_5$ | H | S | N | |
| 36 | $C_6H_5$ | H | S | N | |

Die Konfigurationsangabe bezieht sich auf die β-Methoxy-acrylsäuremethylestergruppe bzw. auf die

Glyoxylsäuremethylester-O-methyloximgruppe.

Die substituierten Pyrimidine der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grndiosella, Earias insulana, Elasmopalpus lignosellus, Eupoecilia ambiguella, Evetria bouliana, Feltia subterranea, Galleria mellonella, Grapholita funebrana, Grapholita molesta, Heliothis armigera, Heliothis virescens, Heliothis zea, Hellula undalis, Hibernia defoliaria, Hyphantria cunea, Hyponomeuta malinellus, Keifferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flamea, Pectinophora gossypiella, Peridroma saucia, Phalera bucephala, Phthorimaea operculella, Phyllocnistis citrella, Pieris brassicae, Plathypena scarbra, Plutella xylostella, Pseudoplusia includens, Phyacionia frustrana, Scrobipalpula absoluta, Sitotroga cerelella, Sparganothis pilleriana, Spodoptera frugiperda, Spodoptera littoralis, Spodoptera litura, Thaumatopoea pityocampa, Tortrix viridana, Trichoplusia ni, Zeiraphera canadensis.

Aus der Ordnung der Käfer (Coleoptera) beispielsweise Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Onlema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus, Sitophilus granaria.

Aus der Ordnung der Zweiflügler (Diptera) beispielsweise Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossia morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea, Tipula paludosa.

Aus der Ordnung der Thripse (Thysanoptera) beispielsweise Frankliniella fusca, Frankliniella occidentalis, Frankliniella tritici, Scirtothrips citri, Thrips oryzae, Thrips palmi, Thrips tabaci.

Aus der Ordnung der Hautflügler (Hymenoptera) beispielsweise Athalia rosae, Atta cephalotes, Atta sexdens, Atta texana, Hoplocampa minuta, Hoplocampa testudinea, Monomorium pharaonis, Solenopsis geminata, Solenopsis invicta.

Aus der Ordnung der Wanzen (Heteroptera) beispielsweise Acrosternum hilare, Blissus leucopterus, Cyrtopeltis notatus, Dysdercus cingulatus, Dysdercus intermedius, Eurygaster integriceps, Euchistus impictiventris, Leptoglossus phyllopus, Lygus lineolaris, Lygus pratensis, Nezara viridula, Piesma quadrata, Solubea insularis, Thyanta perditor.

Aus der Ordnung der Pflanzensauger (Homoptera) beispielsweise Acyrthosiphon onobrychis, Adelges laricis, Aphidula nasturtii, Aphis fabae, Aphis pomi, Aphis sambuci, Brachycaudus cardui, Brevicoryne brassicae, Cerosipha gossypii, Dreyfusia nordmannianae, Dreyfusia piceae, Dyasphis radicola, Dysaulacorthum pseudosolani, Empoasca fabae, Macrosiphum avenae, Macrosiphum euphorbiae, Macrosiphon rosae, Megoura viciae, Metopolophium dirhodum, Myzodes persicae, Myzus cerasi, Nilaparvata lugens, Pemphigus bursarius, Perkinsiella saccharicida, Phorodon humuli, Psylla mali, Psylla piri, Rhopalomyzus ascalonicus, Rhopalosiphum maidis, Sappaphis mala, Sappaphis mali, Schizaphis graminum, Schizoneura lanuginosa, Trialeurodes vaporariorum, Viteus vitifolii.

Aus der Ordnung der Termiten (Isoptera) beispielsweise Calotermes flavicollis, Leucotermes flavipes,

Reticulitermes lucifugus, Termes natalensis.

Aus der Ordnung der Geradflügler (Orthoptera) beispielsweise Acheta domestica, Blatta orientalis, Blattella germanica, Forficula auricularia, Gryllotalpa gryllotalpa, Locusta migratoria, Melanoplus birittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus, Tachycines asynamorus.

Zur Klasse der Arachnoidea gehören Spinnentiere (Acarina) beispielsweise Amblyomma americanum, Amglyomma variegatum, Argas persicus, Boophilus annulatus, Boophilus decoloratus, Boophilus microplus, Brevipalpus phoenicis, Bryobia praetiosa, Dermacentor silvarum, Eotetranychus carpini, Eriophyes sheldoni, Hyalomma truncatum, Ixodes ricinus, Ixodes rubicundus, Ornithodorus moubata, Otobins megnini, Paratetranychus pilosus, Permanyssus gallinae, Phyllocaptrata oleivora, Polyphagotarsonemus latus, Psoroptes ovis, Rhipicephalus appendiculatus, Rhipicephalus evertsi, Saccoptes scabiei, Tetranychus cinnabarinus, Tetranychus kanzawai, Tetranychus pacificus, Tetranychus telarius, Tetranychus urticae.

Zur Klasse der Nematoden zählen beispielsweise Wurzelgallennematoden, z.B. Meloidogyne hapla, Meloidogyne incognita, Meloidogyne javanica, zysten bildende Nematoden, z.B. Globodera rostochiensis, Heterodera avenae, Hetrodera glycinae, Heterodera schatii, Hetrodera triflolii, Stock- und Blattälchen, z.B. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Paratylenchus curvitatus, Partylenchus goodeyi.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, polyoxyethylenalkylether, ethoxyliertes Polyoxypropylen, Laurylalkoholpolyglykoletheracetal, Sorbitester, Lignin-Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 5 Gew.-Teile der Verbindung Nr. 3 werden mit 95 Gew.-Teilen feinteiligem Kaolin innig vermischt. Man erhält auf diese Weise ein Stäubemittel, das 3 Gew.-% des Wirkstoffs enthält.

II. 30 Gew.-Teile der Verbindung Nr. 9 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde,

innig vermischt. Man erhält auf diese Weise eine Aufbereitung des Wirkstoffs mit guter Haftfähigkeit.

III. 10 Gew.-Teile der Verbindung Nr. 4 werden in einer Mischung gelöst, die aus 90 Gew.-Teilen Xylol, 6 Gew.-Teilen des Anlagerungsproduktes von 8 bis 10 Mol Ethylenoxid an 1 Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht.

IV. 20 Gew.-Teile der Verbindung Nr. 21 werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5 Gew.-Teilen des Anlagerungsproduktes von 40 Mol Ethylenoxid an 1 Mol Ricinusöl besteht.

V. 80 Gew.-Teile der Verbindung Nr. 33 werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zübereitungen können in größeren Bereichen variiert werden.

Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,02 bis 10, vorzugsweise 0,1 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Anwendungsbeispiele

In den folgenden Beispielen wurde die Verbindung Nr. 9 hinsichtlich ihrer Wirkung auf Tetranychus telarius (Rote Spinne) und Plutella maculipennis (Kohlschabe) und die Verbindung Nr. 13 hinsichtlich ihrer Wirkung auf Tetranychus telarius (Rote Spinne) untersucht. Die Reinheit des Wirkstoffes betrug > 95 %. Als Formulierung wurde ein 10 %iges Emulsionskonzentrat, enthaltend 70 Gew.% Cyclohexanon, 20 Gew.% Nekanil LN® (≙ Lutensol AP6, Netzmittel mit Emulgier- und Dispergierwirkung auf Basis ethoxylierter Alkylphenole), Emulphor EL® (≙ Emulan EL®, Emulgator auf Basis ethoxylierter Fettalkohole) und 10 % Wirkstoff gewählt. Die in den Beispielen angegebenen Konzentrationen wurden durch Verdünnen des formulierten Wirkstoffes mit Wasser erhalten.

Beispiel 1

Plutella maculipennis (Kohlschaben-Raupen), Fraßwirkung

Blätter von jungen Kohlrabipflanzen wurden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Larvenstadiums belegt. Nach 48 Stunden beurteilt man die Mortalität.

Bei einer Konzentration von 200 ppm der Verbindung Nr. 9 wurde eine hohe Mortalitätsrate erzielt.

Beispiel 2

Tetranychus telarius (Rote Spinne), Dauerkontaktversuch

Bohnenpflanzen (Phaseolus multiflorus) werden in üblicher Weise in der Spritzkabine mit der wäßrigen Wirkstoffaufbereitung gespritzt. Nach dem Trocknen werden von den Blättern Stücke von 25 mm Durchmesser

ausgestanzt und auf ein Zellstoffstück gelegt, dessen Seiten in Wasser hängen. Man belegt die Blattstücke mit je 5 adulten Weibchen der Gewächshausspinnmilbe und wertet nach 6 und 12 Tagen aus.

In diesem Versuch wurde bei einer Konzentration von 2 ppm der Verbindung Nr. 9 eine gute Mortalität beobachtet.

Beispiel 3

Tetranychus telarius (Rote Spinne), Kontaktwirkung, Spritzversuch

Getopfte Buschbohnen, die das zweite Folgeblattpaar zeigen, werden in der Spritzkabine mit der wäßrigen Wirkstoffaufbereitung (ca. 50 ml) tropfnaß gespritzt. Die Pflanzen müssen einen starken Milbenbefall und reichliche Eiablage aufweisen.

Die Wirkung wird nach 5 Tagen mittels Binokular bonitiert. Dabei wird darauf geachtet, ob alle Stadien gleichmäßig erfaßt sind. Die Pflanzen stehen während dieser zeit unter normalen Gewächshausbedingungen.

In diesem Versuch bewirkte eine Wirkstoffkonzentration von 100 ppm der Verbindung Nr. 9 eine 100 %ige Mortalität.

Beispiel 4

Tetranychus telarius (Rote Spinne); Versuch A

Getopfte Buschbohnen, die das zweite Folgeblattpaar zeigen, werden in der Spritzkabine mit der wäßrigen Wirkstoffaufbereitung tropfnaß gespritzt. Die Pflanzen kommen dazu auf den Drehteller und werden von allen Seiten mit insgesamt 50 ml Spritzbrühe besprüht. Die Pflanzen müssen einen starken Milbenbefall und reichliche Eiablage aufweisen.

Die Wirkung wird nach 5 Tagen mittels Binokular bonitiert. Dabei wird darauf geachtet, ob alle Stadien gleichmäßig erfaßt sind. Die Pflanzen stehen während dieser Zeit unter normalen Gewächshausbedingungen.

In diesem Versuch bewirkte eine Wirkstoffkonzentration von 10 ppm der Verbindung Nr. 13 eine 80 %ige Mortalität.

Beispiel 5

Tetranychus telarius (Rote Spinne); Versuch B

Getopfte Buschbohnen, die das zweite Folgeblattpaar zeigen, werden in der Spritzkabine mit der wäßrigen Wirkstoffzübereitung tropfnaß gespritzt. Die Pflanzen kommen dazu auf den Drehteller und werden von allen Seiten mit insgesamt 50 ml Spritzbrühe besprüht. Der Sprühvorgang dauert ca. 20 Sekunden. Nach 24 Stunden infiziert man die Pflanzen mit Blattstücken, die stark mit Spinnmilben besetzt sind.

Die Beurteilung der Wirkung erfolgt nach 12 Tagen.

In diesem Versuch bewirkte eine Wirkstoffkonzentration von 40 ppm der Verbindung Nr. 13 100 % Mortalität.

**Patentansprüche**

1. Verfahren zur Bekämpfung von Insekten und Spinnmilben, dadurch gekennzeichnet, daß man eine für die Schädlinge wirksame Menge eines Pyrimidins der allgemeinen Formel I

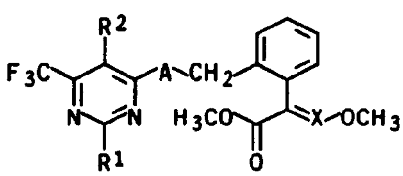

I

in der

| | |
|---|---|
| $R^1$ | $C_1$-$C_6$-Alkyl, $C_3$-$C_6$-Cycloalkyl, $C_1$-$C_4$-Halogenalkyl, $C_1$-$C_4$-Alkoxy, $C_1$-$C_4$-Alkylthio, unsubstituiertes Aryl oder ein oder mehrfach durch $C_1$-$C_6$-Alkyl, $C_1$-$C_4$-Alkoxy oder Halogen substituiertes Aryl; |
| $R^2$ | Halogen oder Wasserstoff; |
| A | Sauerstoff oder Schwefel und |

X CH oder N bedeuten

oder dessen pflanzenverträgliches Säureadditionssalz oder Metallkomplex auf die Schädlinge bzw. deren Lebensraum einwirken läßt.

2. Verfahren zur Bekämpfung von Schädlingen gemäß Anspruch 1, dadurch gekennzeichnet, daß man eine gegen Schädlinge wirksame Menge eines Pyrimidins der allgemeinen Formel I gemäß Anspruch 1, in der $R^1$ n-Propyl oder Cyclo-Propyl, $R^2$ Wasserstoff, A Sauerstoff oder Schwefel und X CH oder N bedeutet, oder dessen pflanzenverträgliches Säureadditionssalz oder Metallkomplex auf die Schädlinge bzw. deren Lebensraum einwirken läßt.

3. Pyrimidine der allgemeinen Formel Ia

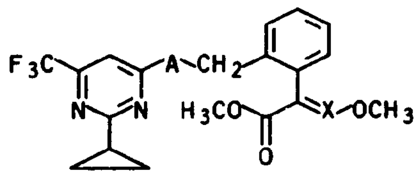

Ia

in der A Sauerstoff oder Schwefel und X CH oder N bedeutet.

4. Verfahren zur Herstellung der Verbindungen Ia gemäß Anspruch 3, dadurch gekennzeichnet, daß man ein Pyrimidin der allgemeinen Formel IIa

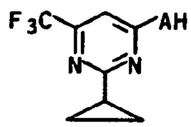

IIa

in an sich bekannter Weise in einem inerten organischen Lösungsmittel in Gegenwart einer Base mit einem Benzylhalogenid der allgemeinen Formel III

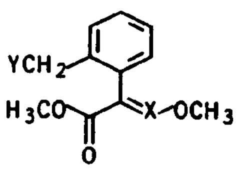

III

in der Y für eine übliche Abgangsgruppe steht, umsetzt.

5. Schädlingsbekämpfungsmittel, enthaltend ein Pyrimidin der allgemeinen Formel Ia gemäß Anspruch 3 und inerte Zusatzstoffe.

## Claims

1. A process for controlling insects and mites, wherein a pesticidally effective amount of a pyrimidine of the general formula I

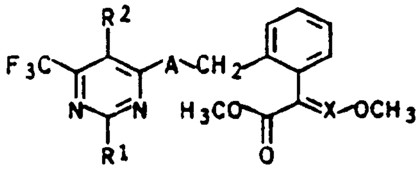

I,

where

$R^1$ is $C_1$-$C_6$-alkyl, $C_3$-$C_6$-cycloalkyl, $C_1$-$C_4$-haloalkyl, $C_1$-$C_4$-alkoxy, $C_1$-$C_4$-alkylthio, or aryl which is unsubstituted or monosubstituted or polysubstituted by $C_1$-$C_6$-alkyl, $C_1$-$C_4$-alkoxy or halogen,

$R^2$ is halogen or hydrogen

A is oxygen or sulfur and

X is CH or N,

or a plant-tolerated acid addition salt or metal complex thereof, is allowed to act on the pests or their habitat.

2. A process for controlling pests as claimed in claim 1, wherein a pesticidally effective amount of a pyrimidine of the general formula I as claimed in claim 1, where $R^1$ is n-propyl or cyclopropyl, $R^2$ is hydrogen, A is oxygen or sulfur and X is CH or N, or a plant-tolerated acid addition salt or metal complex thereof, is allowed to act on the pests or their habitat.

3. Pyrimidines of the general formula Ia

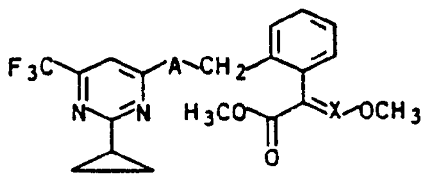

Ia,

where A is oxygen or sulfur and X is CH or N.

4. A process for the preparation of compounds Ia as claimed in claim 3, wherein a pyrimidine of the general formula IIa

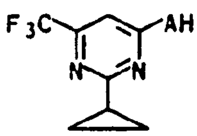

IIa

is reacted in conventional manner in an inert organic solvent in the presence of a base with a benzyl halide of the general formula III

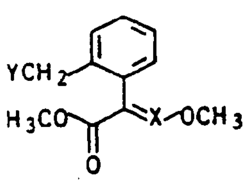

III,

where Y is a conventional leaving group.

5. Pesticides containing a pyrimidine of the general formula Ia as claimed in claim 3 and inert additives.

## Revendications

1. Procédé pour combattre les insectes et les acariens, caractérisé en ce que l'on fait agir sur les parasites ou leur habitat une quantité efficace d'une pyrimidine de formule générale I

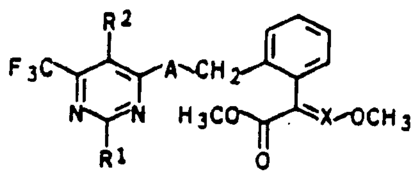

I

dans laquelle
$R^1$ représente un groupe alkyle en C1-C6, cycloalkyle en C3-C6, halogénoalkyle en C1-C4, alcoxy en C1-C4, alkylthio en C1-C4, aryle non substitué ou aryle portant un ou plusieurs substituants alkyle en C1-C6, alcoxy en C1-C4 ou halogéno ;
$R^2$ représente un halogène ou l'hydrogène ;
A représente l'oxygène ou le soufre, et
X représente CH ou N,
ou d'un sel formé par addition avec un acide ou complexe métallique, toléré par les végétaux, d'une telle pyrimidine.

2. Procédé pour combattre les parasites selon la revendication 1, caractérisé en ce que l'on fait agir sur les parasites ou leur habitat une quantité efficace d'une pyrimidine de formule générale I de la revendication 1 dans laquelle $R^1$ représente un groupe n-propyle ou cyclopropyle, $R^2$ représente l'hydrogène, A l'oxygène ou le soufre et X CH ou N, ou d'un sel formé par addition avec un acide ou complexe métallique, toléré par les végétaux, d'une telle pyrimidine.

3. Pyrimidines de formule générale Ia

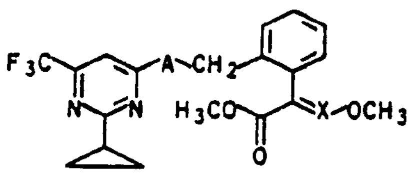

Ia

dans laquelle A représente l'oxygène ou le soufre et X représente CH ou N.

4. Procédé de préparation des composés Ia de la revendication 3, caractérisé en ce que l'on fait réagir une pyrimidine de formule générale IIa

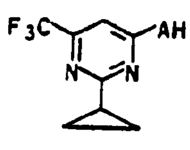

IIa

de manière connue en soi, dans un solvant organique inerte et en présence d'une base, avec un halogénure de benzyle de formule générale III

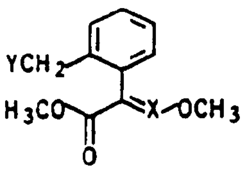

III

5. Produit parasiticide contenant une pyrimidine de formule générale Ia de la revendication 3 et des additifs inertes.